# EUROPEAN PATENT SPECIFICATION

(11) **EP 0 453 929 B1**
(45) Date of publication and mention of the grant of the patent: **02.07.1997**
(21) Application number: 91106065.5
(22) Date of filing: 16.04.1991
(51) Int. Cl.: C08L 101/00

(54) **Resin compositions having antistatic property**
Antistatische Kunstharzzusammensetzung
Composition de résine antistatique

(30) Priority: 16.04.1990 JP 99698/90
(43) Date of publication of application: 30.10.1991
(73) Proprietor: DAI-ICHI KOGYO SEIYAKU CO., LTD., Shimogyo-ku Kyoto (JP)
(72) Inventor: Maki, Hirohisa, Otsu, Shiga (JP); Fujita, Takeshi, Uji-city, Kyoto (JP); Matsuo, Kastsuaki, Shimogyo-ku, Kyoto (JP)
(74) Representative: Strehl Schübel-Hopf Groening & Partner

(56) References cited:
- WO-A-89/12660
- Gächter/Müller, Taschenbuch der Kunststoff-Additive (1983), S.584/585
- PATENT ABSTRACTS OF JAPAN, unexamined applications, C field, vol. 12, No. 353, September 21, 1988 THE PATENT OFFICE JAPANESE GOVERNMENT page 100 C 530
- PATENT ABSTRACTS OF JAPAN; unexamined applications, C field, vol. 9No. 52, March 06, 1985 THE PATENT OFFICE JAPANESE GOVERNMENT page 58 C 269

## Description

### BACKGROUND OF THE INVENTION

### Technical Field

The present invention relates to a resin composition having antistatic property.

### Prior Art

Resins in general are dielectric because of their high surface resistivity and volume resistivity but the very characteristics favor generation of static electricity to charge its surface. This generation of surface charge, in turn, favors deposition of dust on resin products to adversely affect their appearance and quality and may cause a disastrous explosion. For this reason, a variety of techniques have been proposed for imparting antistaticity to resins.

For example, a technique is known which comprises coating a resin product with a surfactant or an ion conductive material. However, the antistaticity imparted by this technique is ready to disappear or be attenuated on friction or cleaning of the resin surface.

WO-A-89/12 660 relates to a resin composition being composed of (A) 100 parts by weight of a polyacetal resin and (B) 1 to 100 parts by weight of a polyether ester blockcopolymer of (a) a dicarboxylic acid component mainly comprising terephthalic acid, (b) a glycol component mainly comprising 1,4-butandiol and (c) a poly(ethylene oxide) glycol derivative of a number average molecular weight of 500 to 20,000 containing 20 to 95 weight % of poly(ethylene oxide) carboxylate units. This composition is said to have excellent antistatic and mechanical properties, particularly impact resistance.

### SUMMARY OF THE INVENTION

The object of the present invention is to solve the above-mentioned problem and provide a clear resin composition containing a high molecular compound, which is defined herein, in a small proportion and capable of giving resin products with adequate and semi-permanent antistaticity or ion conductivity.

The present invention is, therefore, directed to a resin composition having antistatic property comprising (A) 100 parts by weight of a resin selected among polyethylene, polypropylene, ethylene-propylene copolymer, polyvinyl chloride, ethylene-vinyl chloride copolymer, polystyrene, styrene-butadiene copolymer, poly(methyl methacrylate), acrylonitrile-butadiene-styrene terpolymer, polyalkylene phthalate and other saturated polyester polyamides, polycarbonate, polyurethane, urea resin, melamine resin, unsaturated polyester resin, epoxy resin, polyurethane resin, phenolic resin, silicone resin and fluororesin and (B) 0.1 to 20 parts by weight of a high molecular compound having a weight average molecular weight of not less than 10,000 as prepared by reacting a polymer, producible by addition-polymerization of ethylene oxide or a mixture of ethylene oxide with another alkylene oxide in which the ethylene oxide content is not less than 50 weight %, with an organic compound containing two active hydrogen atoms, with at least one member selected from the group consisting of polycarboxylic acids, polycarboxylic anhydrides, polycarboxylic acid lower alkyl esters and organic polyisocyanates.

The term 'average molecular weight' is used herein to mean 'weight average molecular weight'.

One of the components of said high molecular compound constituting the clear resin composition of the present invention is a polymer, producible by addition-polymerization of ethylene oxide or a mixture of ethylene oxide with another alkylene oxide in which the ethylene oxide content is not less than 50 weight %, with an organic compound containing two active hydrogen atoms. (hereinafter referred to briefly as POAG).

The active hydrogen groups mentioned just above include alcoholic hydroxy groups, amino groups, phenolic hydroxy groups. Examples of such organic compound containing two active hydrogen groups are ethylene glycol, diethylene glycol, propylene glycol, dipropylene glycol, 1,4-butanediol, 1,6-hexanediol, neopentyl glycol, bisphenol A, polyethylene glycol, polypropylene glycol, polytetramethylene glycol, butylamine, octylamine, laurylamine, cyclohexylamine.

The alkylene oxide to be addition-polymerized is an alkylene oxide which contains ethylene oxide as an essential component and one or more additional alkylene oxides such as propylene oxide, butylene oxide, styrene oxide.

This addition polymerization is carried out in the presence of a catalyst, which is preferably a caustic alkali such as sodium hydroxide, potassium hydroxide, etc., at a temperature of about 90 to 200°C for about 2 to 30 hours.

Where the average molecular weight of the resulting polymer is less than 100 and/or the ethylene oxide content thereof is less than 50 weight %, the inhibition of static electricity is not satisfactory.

The polycarboxylic acid, an anhydride thereof, or a lower alkyl ester thereof, which is to be reacted with POAG include, among others:-
(a) malonic acid, succinic acid, maleic acid, fumaric acid, adipic acid, sebacic acid, phthalic acid, isophthalic acid, terephthalic acid, itaconic acid, trimellitic acid, pyromellitic acid and dimer acid;
(b) anhydrides of the acids mentioned in (a); and
(c) the corresponding monomethyl ester, dimethyl ester, monoethyl ester, diethyl ester, monopropyl ester, dipropyl ester, monobutyl ester, dibutyl ester, and so on.

Reacting said POAG with such a polycarboxylic acid, anhydride or lower alkyl ester gives rise to the high molecular compound for the present invention.

For example, the high molecular compound can be obtained by reacting said POAG with said polycarboxylic acid, anhydride or lower alkyl ester in a stoichiometric ratio necessary for esterification or transesterification at a temperature of 120-250°C and a pressure of 10⁻⁴ to 10 Torr.

The organic polyisocyanate to be reacted with said POAG includes, among others, tolylene diisocyanate, 4,4'-methylenebis(phenyl isocyanate), hexamethylene diisocyanate, isophorone diisocyanate, xylylene diisocyanate, 4,4'-methylenebis(cyclohexyl isocyanate), 4,4'-isopropylidenebis(cyclohexyl isocyanate), trimethyl hexamethylene diisocyanate.

Thus, the high molecular compound for the present invention can be produced by reacting said POAG with said organic polyisocyanate.

The reaction between said POAG and organic polyisocyanate can be carried out in an NCO/OH ratio of 1.5 to 0.5 at a temperature of 80 to 150°C for 1 to 5 hours, for instance.

The average molecular weight of said high molecular compound is preferably not less than 10,000. If the molecular weight is less than 10,000, it tends to bleed out on the resin surface to make it sticky.

The resin composition having antistatic property of the present invention contains 0.1 to 20 parts by weight, preferably 0.5 to 5 parts by weight, of the high molecular compound per 100 parts by weight of resin. If the proportion of the high molecular compound is less than 0.1 part by weight, the antistaticity or ion conductivity of the resin composition will not be adequate, while the use of the high molecular compound in excess of 20 parts by weight tends to sacrifice the mechanical strength of the resin.

There is no limitation on the configuration of products that can be molded from the resin composition of the invention. For example, the products may be those which can be manufactured by such techniques as compression molding, injection molding, blow molding, etc., inclusive of films, sheets, filaments, pellets, powders and so on. By taking advantage of its ion conductivity characteristic, the resin composition can be utilized in the manufacture of battery electrodes, in the field of electrostatic coating or as an undercoat material for plating.

To manufacture the resin composition of the invention, the high molecular compound can be kneaded into the resin or added to materials for the production of the resin. While it is generally used as evenly mixed in, the high molecular compound may be made into a film or sheet for lamination with an ordinary resin film.

The resin which can be employed for the purposes of the invention is selected among polyethylene, polypropylene, ethylene-propylene copolymer, polyvinyl chloride, ethylene-vinyl chloride copolymer, polystyrene, styrene-butadiene copolymer, poly(methyl methacrylate), acrylonitrile-butadiene-styrene terpolymer, polyalkylene phthalate and other saturated polyester polyamides, polycarbonate, polyurethane, urea resin, melamine resin, unsaturated polyester resin, epoxy resin, phenolic resin, silicone resin and fluororesin.

The resin composition of the invention may contain such additives as a plasticizer, lubricant, stabilizer, colorant, filler and so on.

While ordinary synthetic resin generally has a surface resistivity of not less than 10¹⁴ Ω·cm and therefore has high staticity, the resin composition of the invention has a surface resistivity of only 10¹³ Ω·cm or less and, therefore, has marked antistaticity and ion conductivity. Furthermore, these characteristics are sustained without attenuation for a long period of time. Furthermore, the resin composition of the invention is not different from the substrate resin in appearance and basic characteristics and can be similarly molded.

Thus, in accordance with the present invention, it is now possible to provide a clear resin composition capable of insuring adequate antistaticity or ion conductivity on a semi-permanent basis by way of incorporation of a high molecular compound in a small proportion, thus contributing remarkably to the related industry and the users.

### DETAILED DESCRIPTION OF THE PREFERRED EMBODIMENTS

The following examples and comparative examples are intended to further illustrate various modes of embodiments and effects of the invention.

### Example 1

A vacuum kneader was charged with 100 parts of polyethylene glycol having an average molecular weight of 5,000, 3.88 parts of dimethyl terephthalate and 0.1 part of a 10% aqueous solution of potassium hydroxide flakes and the temperature was increased to 200°C under a vacuum of 1 Torr. The reaction was conducted under the above conditions for 3 hours, with the byproduct methanol being continuously removed to give a high molecular compound.

As determined by high performance liquid chromatography, this high molecular compound had an average molecular weight of about 100,000.

Three parts of the above high molecular compound was mixed with 100 parts of low-density polyethylene and the mixture was molded into a sheet, 1.0 mm thick, using an extrusion molding machine set to a cylinder temperature of 170°C and a T-die temperature of 170°C.

The sheet was measured for friction-generated charge (Kyoto University Institute for Chemical Research type rotary static tester) and surface resistivity (Toa Dempa Kogyo ultra-insulation resistance meter SM-10E) at 20°C and 60% RH. The results are set forth in Table 1. The surface resistivity values in the table are the values found immediately after molding, after one month of standing and after 30 minutes of heating at 80°C.

### Example 2

A mixture consisting of 2.5 parts of a high molecular compound (average molecular weight 140,000), obtained from dipropylene glycol-ethylene oxide/propylene oxide (70:30 by weight) adduct (ethylene oxide content 70 wt. %, average molecular weight 2,700) and adipic acid monoester, and 100 parts of polypropylene was molded into a sheet, 1.0 mm thick, using an extrusion molding machine set to a cylinder temperature of 180°C and a T-die temperature of 180°C. The sheet was measured for the same parameters in the same manner as Example 1. The results are set forth in Table 1.

### Example 3

Three parts of a high molecular compound (average molecular weight 200,000) obtained from polyethylene glycol with an average molecular weight of 1,000 and 4,4'-methylenebis(phenyl isocyanate) was mixed with 100 parts of polyvinyl chloride, 50 parts of a plasticizer (dioctyl phthalate) and 2 parts of calcium stearate and the mixture was molded into a sheet in the same manner as Example 1. The sheet was measured for the same parameters in the same manner as Example 1. The results are set forth in Table 1.

### Example 4

Three parts of a high molecular compound (average molecular weight 80,000) obtained from bisphenol A-ethylene oxide adduct (ethylene oxide content 92 weight %, average molecular weight 3,000) and succinic anhydride was mixed with 100 parts of acrylonitrile-butadiene-styrene terpolymer and the mixture was extrusion-molded into a sheet at a cylinder temperature of 195°C and a T-die temperature of 200°C as in Example 1. The results are set forth in Table 1.

### Example 5

Three parts of a high molecular compound (average molecular weight 150,000) obtained from polytetramethylene glycol (average molecular weight 2,000)-ethylene oxide adduct (ethylene oxide content 90 wt. %, average molecular weight 20,000) and pyromellitic dianhydride was mixed with 100 parts of polyethylene terephthalate resin and 0.1 part of monomethylhydroquinone in a nitrogen atmosphere at 290°C and molded into a sheet 1 mm in thickness.

The surface resistivity of the sheet was 5 x 10⁹ Ω·cm immediately after molding and 6 x 10⁹ Ω·cm after heat treatment. For reference, the surface resistivity of a polyethylene terephthalate sheet was more than 10¹⁶ Ω·cm.

### Comparative Examples 1-4

The electrical characteristics of resin sheets which did not contain the high molecular compound of the invention were measured. The results are also shown in Table 1.

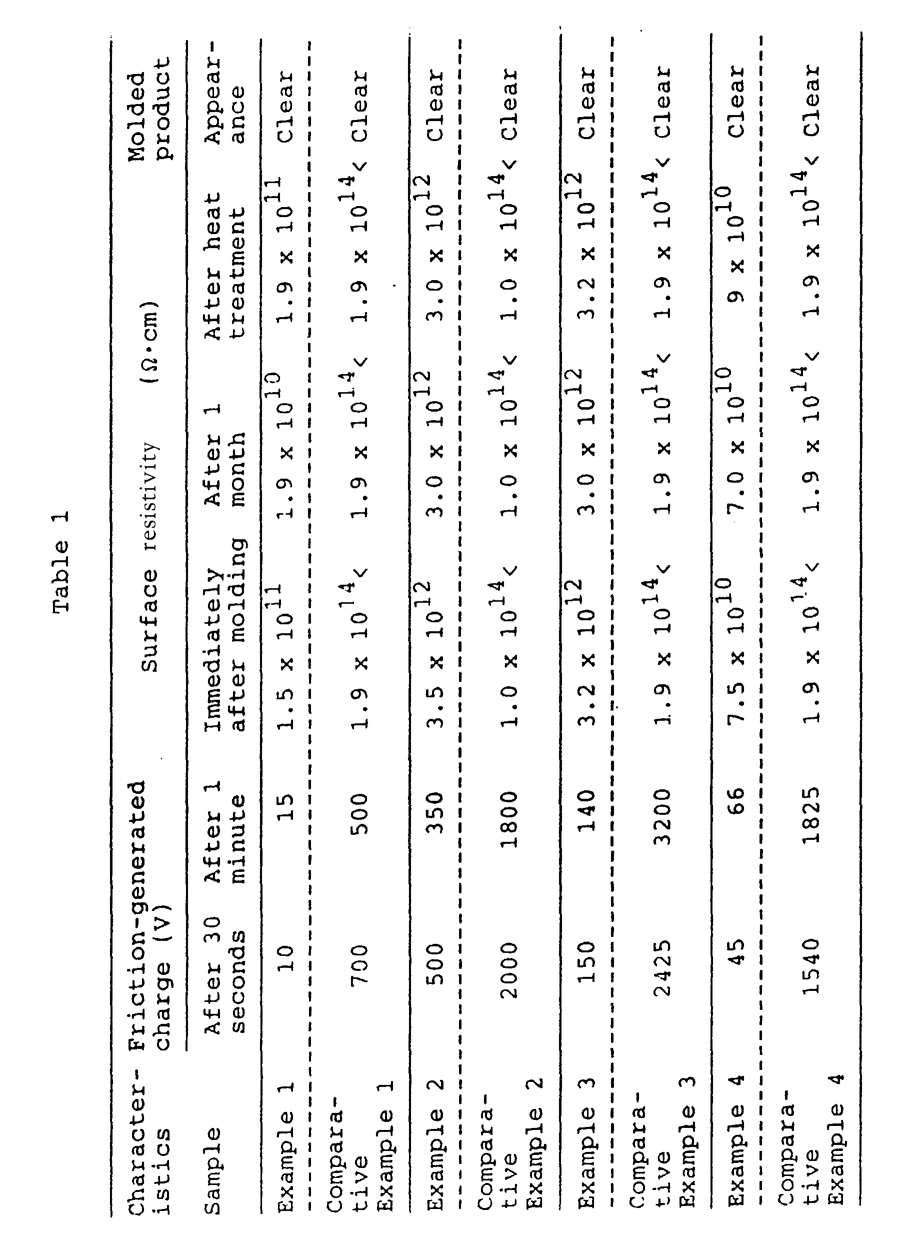

## Claims

1. A resin composition having antistatic property comprising (A) 100 parts by weight of a resin selected among polyethylene, polypropylene, ethylene-propylene copolymer, polyvinyl chloride, ethylene-vinyl chloride copolymer, polystyrene, styrene-butadiene copolymer, poly(methyl methacrylate), acrylonitrile-butadiene-styrene terpolymer, polyalkylene phthalate and other saturated polyester, polyamides, polycarbonate, polyurethane, urea resin, melamine resin, unsaturated polyester resin, epoxy resin, phenolic resin, silicone resin and fluororesin and (B) 0.1 to 20 parts by weight of a high molecular compound having a weight average molecular weight of not less than 10,000 as prepared by reacting a polymer, producible by addition-polymerization of ethylene oxide or a mixture of ethylene oxide with another alkylene oxide in which the ethylene oxide content is not less than 50 weight %, with an organic compound containing two active hydrogen atoms, with at least one member selected from the group consisting of polycarboxylic acids, polycarboxylic anhydrides, polycarboxylic acid lower alkyl esters and organic polyisocyanates.

## Patentansprüche

1. Harzzusammensetzung mit antistatischer Eigenschaft, umfassend (A) 100 Gewichtsteile eines unter Polyethylen, Polypropylen, Ethylen-Propylen-Copolymer, Polyvinylchlorid, Ethylen-Vinylchlorid-Copolymer, Polystyrol, Styrol-Butadien-Copolymer, Poly(methylmethacrylat), Acrylnitril-Butadien-Styrol-Terpolymer, Polyalkylenphthalat und anderen, gesättigten Polyestern, Polyamiden, Polycarbonat, Polyurethan, Harnstoffharz, Melaminharz, ungesättigtem Polyesterharz, Epoxyharz, Phenolharz, Siliconharz und Fluorharz ausgewählten Harzes und (B) 0,1 bis 20 Gewichtsteile einer hochmolekularen Verbindung mit einem Gewichtsmittel des Molekulargewichts von nicht weniger als 10 000, die durch Reaktion eines Polymers, welches durch Additionspolymerisation von Ethylenoxid oder einem Gemisch aus Ethylenoxid mit einem anderen Alkylenoxid, worin der Ethylenoxidgehalt nicht weniger als 50 Gew.-% beträgt, mit einer zwei aktive Wasserstoffatome enthaltenden organischen Verbindung herstellbar ist, mit mindestens einem aus der aus Polycarbonsäuren, Polycarbonsäureanhydriden, Niederalkylestern von Polycarbonsäuren und organischen Polyisocyanaten bestehenden Gruppe ausgewählten Mitglied hergestellt wird.

## Revendications

1. Composition de résine ayant des propriétés antistatiques comprenant (A) 100 parties en poids d'une résine choisie parmi le polyétylène, le polypropylène, le copolymère éthylène-propylène, le chlorure de polyvinyle, le copolymère éthylène-chlorure de vinyle, le polystyrène, le copolymère styrène-butadiene, le poly(méthacrylate de méthyle), le terpolymère acrylonitrile-butadiene-styrène, le phthalate de polyalkylène et d'autres polyesters saturés, les polyamides, un polycarbonate, un polyurethanne, une résine d'urée, une résine mélamine, une résine polyester insaturé, une résine époxy, une résine phénolique, une résine de silicone et une résine fluorée et (B) 0,1 à 20 parties en poids d'un composé de haut poids moléculaire ayant un poids moléculaire moyen en poids non inférieur à 10.000 tel que préparé en faisant réagir un polymère, obtenu par polymérisation d'addition d'oxyde d'éthylène ou d'un mélange d'oxyde d'éthylène avec un autre oxyde d'alkylène dans lequel la proportion d'oxyde d'éthylène n'est pas inférieure 50 % en poids, avec un composé organique contenant deux atomes d'hydrogène actifs, avec au moins un composé choisi dans le groupe constitué par les acides polycarboxyliques, les anhydrides polycarboxyliques, les esters d'acides polycarboxyliques et d'alkyle inférieur et les polyisocyanates organiques.
